# EUROPÄISCHE PATENTSCHRIFT

(11) **EP 4 021 723 B1**
(45) Veröffentlichungstag und Bekanntmachung des Hinweises auf die Patenterteilung: **27.09.2023**
(21) Anmeldenummer: 20751177.5
(22) Anmeldetag: 11.08.2020
(51) Int. Cl.: B32B 17/10, B29C 55/18

(54) **VERFAHREN UND VORRICHTUNG ZUR HERSTELLUNG EINER THERMOPLASTISCHEN ZWISCHENSCHICHTFOLIE**
METHOD AND DEVICE FOR PRODUCING A THERMOPLASTIC INTERLAYER FILM
PROCÉDÉ ET DISPOSITIF DE FABRICATION D'UNE FEUILLE DE COUCHES INTERMÉDIAIRE THERMOPLASTIQUE

(30) Priorität: 29.08.2019 EP 19194416
(43) Veröffentlichungstag der Anmeldung: 06.07.2022
(73) Patentinhaber: Saint-Gobain Glass France, 92400 Courbevoie (FR)
(72) Erfinder: KANNENGIESSER, Raphaela, 52064 Aachen (DE); KLEIN, Marcel, 52499 Baesweiler (DE); KEWITZ, Markus, 52070 Aachen (DE); LATZ, Franz-Josef, 52459 Inden (DE)
(74) Vertreter: Gebauer, Dieter Edmund
(86) Internationale Anmeldenummer: PCT/EP2020/072500
(87) Internationale Veröffentlichungsnummer: WO 2021/037554

(56) Entgegenhaltungen:
- EP-A1- 2 331 324
- EP-B1- 2 331 324
- WO-A1-2014/087872
- DE-T2- 69 426 873
- GB-A- 940 367
- GB-A- 2 233 597

## Beschreibung

Die Erfindung betrifft ein Verfahren zur Herstellung einer thermoplastischen Zwischenschichtfolie einer Verbundglasscheibe, welches die Schritte des Erwärmens der Zwischenschichtfolie durch Umlaufen einer Heizwalze und des anschließenden Konditionierens und Konfigurierens der Zwischenschichtfolie über einen Reckkegel einschließt. Sie betrifft des Weiteren eine Vorrichtung zur Durchführung dieses Verfahrens.

Im Fahrzeugbau, insbesondere in der Automobilindustrie, aber auch bei der Herstellung von Bauelementen für das Bauwesen und die Inneneinrichtung, werden massenhaft Verbundglasscheiben eingesetzt. Zur Herstellung der benötigten Stückzahlen werden hochproduktive Fertigungsanlagen für die benötigten Komponenten sowie für die Montage und Konfigurierung der Verglasungseinheiten eingesetzt. Die Komponenten und montierten Verglasungseinheiten werden in diesen Anlagen mit hoher Durchlaufgeschwindigkeit bzw. sehr kurzen Taktzeiten bearbeitet bzw. montiert, und eine Optimierung der Prozessabläufe ist eine wichtige Quelle von Produktivitätssteigerungen und Kostensenkungen in dieser Branche.

Eine Verbundscheibe umfasst mindestens eine Außenscheibe und eine Innenscheibe, die über eine Zwischenschicht miteinander verbunden sind. Die Verbundscheibe ist dafür vorgesehen, in einer Fensteröffnung beispielsweise eines Fahrzeugs, eines Gebäudes oder eines Raums, den Innenraum gegenüber der äußeren Umgebung abzutrennen. Mit Innenscheibe wird im Sinne der Erfindung die dem Innenraum zugewandte Scheibe bezeichnet. Mit Außenscheibe wird die der äußeren Umgebung zugewandte Scheibe bezeichnet. Die thermoplastische Zwischenschicht dient der Verbindung der beiden Scheiben, wie es bei Verbundscheiben üblich ist.

Die Außenscheibe und die Innenscheibe sind zumeist aus Glas gefertigt. Grundsätzlich können sie aber auch aus Kunststoff bestehen. Die Dicke der Außenscheibe und der Innenscheibe kann breit variieren und so den Erfordernissen im Einzelfall angepasst werden. Die Außenscheibe und die Innenscheibe weisen bevorzugt Dicken von 0,5 mm bis 5 mm auf, besonders bevorzugt von 1 mm bis 3 mm. Die Scheiben können klar sein, oder auch getönt oder gefärbt.

Die Außen- und Innenscheibe werden durch Laminieren mit einer thermoplastischen Kunststofffolie, insbesondere einer PVB(Polyvinylbutyral)-Folie, oder auch mit mehreren solchen Folien, miteinander verbunden. Die Dicke dieser Folien in der Verbundscheibe liegt üblicherweise im Bereich zwischen 50 µm und 1 mm, insbesondere zwischen etwa 0,5 mm und 0,8 mm. Nachfolgend wird eine solche Folie als Zwischenschichtfolie bezeichnet.

Um die Zwischenschichtfolie in ihren Eigenschaften für den Einbau in eine Verbundglasscheibe zu konditionieren und zugleich zu konfigurieren, also einen Zuschnitt auf die Form der Verbundglasscheibe und einen spannungsfreien Einbau in diese zu ermöglichen, wird die Folie einem Verfahren unterzogen, welches die eingangs erwähnten Verfahrensschritte umfasst.

Verfahren und Vorrichtungen zum Konditionieren von Zwischenschichtfolien sind beispielsweise aus der GB 940 367 A, der WO 2014/087872 A1 und der DE 694 26 873 T2 bekannt.

Es hat sich bei diesen Verfahren herausgestellt, dass im Interesse einer hohen Produktivität der Folienherstellung und optimaler Einsatzmöglichkeiten auch bei komplex geformten Verbundglasscheiben noch Verbesserungsbedarf besteht.

Speziell stellen die Fahrzeughersteller immer höhere Anforderungen an die optische Qualität der für die Fahrzeuge hergestellten Verglasungseinheiten. Hieraus ergeben sich auch erhöhte optische Anforderungen an die in den Verglasungseinheiten eingesetzten Zwischenschichtfolien.

Mithin liegt der Erfindung die Aufgabe zu Grunde, ein in dieser Hinsicht verbessertes Verfahren der obengenannten Art und eine entsprechende verbesserte Vorrichtung bereitzustellen.

Diese Aufgabe wird durch ein Verfahren mit den Merkmalen des Anspruchs 1 und einen die Vorrichtung betreffenden Anspruch gelöst. Zweckmäßige Fortbildungen des Erfindungsgedankens sind Gegenstand der jeweiligen abhängigen Ansprüche.

Die Erfindung schließt den Gedanken ein, im Rahmen der an sich bekannten Verfahrensführung in der Phase des Konditionierens und Vorkonfigurierens der Zwischenschichtfolie mittels eines Reckkegels (oder auch einfach einer im Wesentlichen zylindrischen Reckwalze) Maßnahmen zur verbesserten Behandlung der Folie zur Erreichung einer verbesserten Oberflächenqualität vorzusehen. Grundsätzlich sind dieser Gedanke und die Erfindung mit ihren wesentlichen Merkmalen auch zur Herstellung bzw. Behandlung anderer thermoplastischer Kunststofffolien, also solcher, die nicht für den Einbau in eine Verbundglasscheibe vorgesehen sind, geeignet.

Nach den Erkenntnissen der Erfinder ist der Einsatz eines Reckkegels mit einer möglichst durchgehend glatten, von Inhomogenitäten freien Oberfläche bedeutsam, um jedenfalls die mit dem Reckkegel in Berührung stehende Oberfläche der Zwischenschichtfolie frei von optischen Störungen zu halten. Entsprechend wird erfindungsgemäß vorgeschlagen, einen Reckkegel mit einer im Wesentlichen kontinuierlich geschlossenen Umfangsfläche bei dem Verfahren einzusetzen.

Zur Realisierung dieser Verfahrensbedingung wird vorgeschlagen, einen Reckkegel einzusetzen, dessen die Zwischenschichtfolie kontaktierende Oberfläche im Wesentlichen vollständig mit einem Umfangsblech bedeckt ist.

Des Weiteren haben die Erfinder festgestellt, dass auch die Oberflächenqualität der von dem Reckkegel abgewandten, "freien" Oberfläche der Zwischenschichtfolie verbessert werden kann. Hierzu wird der Einsatz mindestens einer Andruckwalze vorgeschlagen, deren Oberfläche mit der Oberfläche des Reckkegels einen geometrisch präzise bestimmten Spalt bildet, in welchem die freie Oberfläche der Zwischenschichtfolie einer präzisen Formung unterworfen wird. Insbesondere ist das Verfahren dann so ausgestaltet, dass die Zwischenschichtfolie mit zwei oder mehr Andruckwalzen an den Umfang des Reckkegels angedrückt wird.

In einer Ausführung der Erfindung wird ein Reckkegel eingesetzt, dessen Umfangsbereich höchstens eine Blechkante aufweist, der nur einen einzigen Abdruck in der benachbarten Oberfläche der Zwischenschichtfolie hinterlassen kann. Zur weiteren Qualitätsverbesserung der Zwischenschichtfolie ist es vorteilhaft, diese Blechkante zusätzlich abgeschrägt und/oder abgerundet auszuführen.

Die Vorrichtung kann dann konstruktiv derart ausgestaltet sein, dass die Umfangsfläche des Reckkegels durch ein einziges zusammenhängendes flexibles Blech derart gebildet ist, dass auf der Umfangsfläche eine Kante jenes Bleches vorhanden ist, während die andere Kante des Bleches unter demselben und mithin nicht auf der Umfangsfläche liegt. Die frei auf der Umfangsfläche liegende Kante (nachfolgend auch als Außen-Blechkante bezeichnet) kann insbesondere noch abgeschrägt oder abgerundet ausgeführt sein, um einen "harten" Abdruck in der dem Reckkegel zugewandten Oberfläche der Zwischenschichtfolie zu vermeiden.

Im Interesse einer hohen Lebensdauer des Umfangsbleches und möglichst geringer Beeinträchtigungen seiner Oberfläche durch Umwelteinflüsse ist das Blech insbesondere aus einem Edelstahl gefertigt, speziell mit einer polierten Oberfläche. Die Dicke des Bleches kann im Bereich zwischen 0,5 mm und 2 mm liegen.

In einer weiteren, zur Verarbeitung von Zwischenschichtfolien mit unterschiedlichen Konditionierungs- und Konfigurierungsanforderungen geeigneten konstruktiven Ausgestaltung ist das Blech derart dimensioniert und spiralartig über einem Grundkörper des Reckkegels angeordnet, dass mindestens an einem Ende des Reckkegels dessen Durchmesser veränderbar ist. Alternativ hierzu kann auch vorgesehen sein, für jede spezifische Kegelstrumpf-Konfiguration des Reckkegels ein speziell für diese konfiguriertes Umfangsblech einzusetzen, welches die mit der Zwischenschichtfolie in Berührung kommende Oberfläche des Reckkegels gewissermaßen perfekt überdeckt. Diese letztere Ausführung ist insbesondere für Produktionsprozesse sinnvoll, bei denen große Chargen mit ein und derselben Einstellung des Reckkegels gefertigt werden.

In speziellen konstruktiven Ausführungen des Umfangsbleches ist vorgesehen, dass das Umfangsblech Mittel zum lösbaren Fixieren auf dem Reckkegel aufweist oder ihm Mittel zum lösbaren Fixieren auf dem Reckkegel zugeordnet sind. Speziell können hierbei die am Umfangsblech vorgesehenen Mittel zum lösbaren Fixieren eine Abkantung des Umfangsbleches oder die dem Umfangsblech zugeordneten Mittel zum lösbaren Fixieren Schrauben zum Verschrauben des Umfangsbleches mit dem Umfang des Reckkegels aufweisen.

Grundsätzlich kann die gewünschte Anpresswirkung mit relativ zum Reckkegel fest gelagerten und eingestellten Hilfsmitteln erreicht werden. Dies wäre auch die einfachste Ausführung von Mitteln zur Beaufschlagung der Zwischenschichtfolie mit einem Anpressdruck. Wegen der höheren Flexibilität und der leichten Berücksichtigung von Toleranzen und Abnutzungserscheinungen ist jedoch eine einstellbare Positionierung der jeweiligen Andruckmittel in Bezug auf die Oberfläche des Reckkegels aus derzeitiger Sicht bevorzugt.

In einem speziellen Anwendungsfall hat die zu bearbeitende Polymerfolie eine in Breitenrichtung nicht-konstante Dicke, wobei sich die Dicke insbesondere kontinuierlich von einer Seitenkante zur anderen hin vergrößert. Zur erfindungsgemäßen Bearbeitung einer derart beschaffenen Zwischenschichtfolie wird eine Verfahrensführung vorgeschlagen, bei der entsprechend einem Dickenprofil der Zwischenschichtfolie mit über deren Breite nicht-konstanter Dicke ein Umfangsspalt mit nicht-konstanter Breite zwischen dem Umfang des Reckkegels und den Umfängen der Andruckwalzen eingestellt wird.

In einer für die Durchführung des Verfahrens ausgestalteten Vorrichtung sind entsprechend Einstellmittel zur Einstellung eines solchen Führungsspaltes mit nicht-konstanter Breite, etwa zum Kippen der Andruckwalzen bezüglich der Oberfläche bzw. Achse des Reckkegels vorgesehen. Derartige Einstellvorrichtungen sind dem Fachmann bekannt und bedürfen daher hier keiner genaueren Beschreibung.

Die Erfindung wird anhand von Figuren und Ausführungsbeispielen näher erläutert. Die Zeichnung ist eine schematische Darstellung und nicht maßstabsgetreu. Die Figuren schränken die Erfindung in keiner Weise ein.

Es zeigen:
- Fig. 1: eine schematische Schnittansicht einer bekannten Vorrichtung zur Herstellung einer thermoplastischen Zwischenschichtfolie einer Verbundglasscheibe,

- Fig. 2: eine perspektivische Ansicht des Reckkegels der Vorrichtung aus Fig. 1,
- Fig. 3: eine schematische Schnittansicht einer Vorrichtung gemäß einer Ausführung der Erfindung,
- Fig. 4A, 4B: das Umfangsblech 5 aus der Vorrichtung nach Fig. 3 in einer ersten Konfiguration größeren Durchmessers bzw. einer zweiten Konfiguration kleineren Durchmessers des Reckkegels, und
- Fig. 5A, 5B: Ausgestaltungen des Umfangsbleches der Vorrichtung nach Fig. 3.

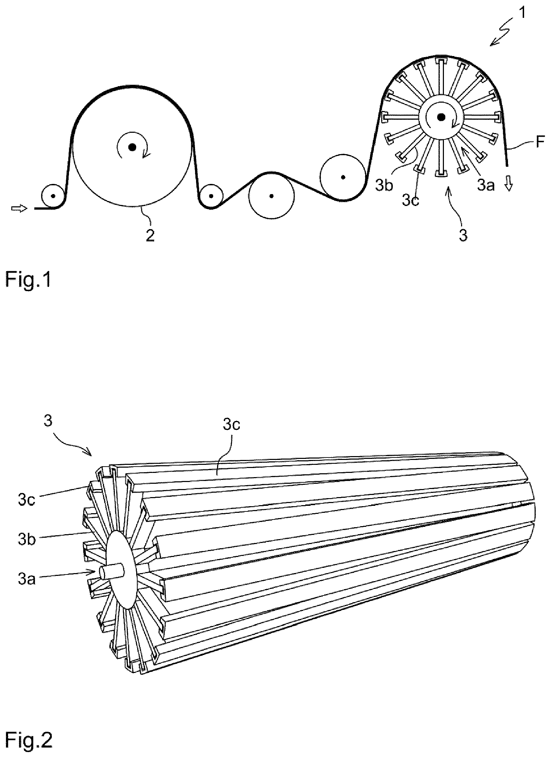

Fig. 1 zeigt schematisch einen Abschnitt einer Anlage 1 zum Konditionieren und Konfigurieren einer als Zwischenschichtfolie in einer Verbundglasscheibe vorgesehenen PVB-Folie F. Als an sich bekannte Komponenten umfasst die Anlage 1 eine Heiztrommel 2 und einen kegelstumpfförmig geformten Reckkegel 3, der auch als Umbrella bezeichnet wird. Des Weiteren umfasst die Anlage eine Mehrzahl von Transport-, Führungs- und Umlenkwalzen, die hier nicht einzeln bezeichnet sind und deren Funktion dem Fachmann bekannt bzw. ohne weiteres aus der Figur ersichtlich ist. Es versteht sich, dass mit den der Heiztrommel 2 benachbarten Umlenk- und Transportwalzen zugleich ein Andruck der PVB-Folie F auf den von ihr umschlungenen Umfangsbereich der Heiztrommel 2 sowie mit den dem Reckkegel 3 benachbarten Walzen zugleich ein Andruck auf die Oberfläche des Reckkegels erzeugt wird.

Fig. 2 zeigt in einer perspektivischen Darstellung den Reckkegel 3 der Vorrichtung 1 aus Fig. 1. Dieser umfasst auf einem Grundkörper 3a in gleichen Umfangs-Abständen angeordnete streifenförmige Träger, die auch als "Speichen" bezeichnet werden können, und an deren freier Kante ist jeweils eine Lamelle 3c angebracht. Die Lamellen 3c der über den Umfang verteilten "Speichen" bilden eine nicht-geschlossene Umfangsfläche des Reckkegels. Durch geeignete (nicht gezeigte) Verstellmittel lassen sich die Speichern 3b bezüglich des Grundkörpers 3a verstellen, und hierdurch lässt sich ein gewünschter Kegelwinkel des Reckkegels 3 einstellen.

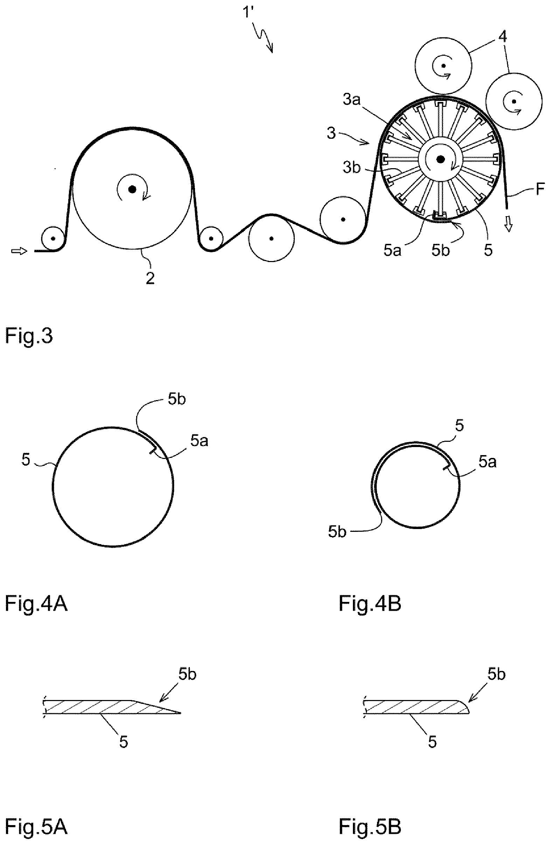

Fig. 3 zeigt eine der Vorrichtung nach Fig. 1 und 2 gegenüber verbesserte Vorrichtung 1'. Diese umfasst geeignete Mittel zur Erreichung der gewünschten verbesserten Oberflächenbeschaffenheit der Zwischenschichtfolie während des Reckens und Konfigurierens. Es wird darauf hingewiesen, dass diese Figur (wie auch die beiden anderen) lediglich als Prinzipskizze zu verstehen ist und weder maßstäblich sein noch den genauen konstruktiven Aufbau in einer praktischen Realisierung zeigen soll.

In der Figur ist zu erkennen, dass der Reckkegel 3 eine spezielle Oberflächenkonfiguration hat, die durch ein über seinen Umfang gewickeltes Umfangsblech 5 realisiert ist. Das Umfangsblech 5 überdeckt die durch die Lamellen 3c gebildete Umfangsstruktur des Reckkegels derart, dass oberflächlich lediglich noch die einzelne äußere Begrenzungskante 5b des Umfangsbleches 5 in Erscheinung tritt. Hierdurch wird die Bildung einer Mehrzahl von Abdrücken der Oberfläche des Reckkegels in der ihr zugewandten Oberfläche der Zwischenschichtfolie vermieden und somit die Ebenheit und letztlich die optische Qualität jener Oberfläche gravierend verbessert.

Zur Erzeugung eines zusätzlichen Andrucks auf die PVB-Folie F im Umschlingungsbereich des Reckkegels 3 und zugleich zur Bildung eines geometrisch exakt definierten Spaltes zum Glätten der von dem Reckkegel abgewandten Oberfläche der Folie F sind an dem Reckkegel zwei zusätzliche Walzen 4 mit wesentlich geringerem Durchmesser angeordnet, die hier als Andruckwalzen bezeichnet werden. Es versteht sich, dass die Andruckwalzen 4 - ebenso wie alle übrigen Walzen - in einem Walzengerüst der Anlage 1 gehaltert sind.

Bevorzugt erfolgt diese Halterung über Verstellmittel, die eine gewisse Einstellung der Relativposition der Andruckwalzen 4 bezüglich der Oberfläche des Reckkegels 3 und somit auch die Einstellung eines gewünschten Anpressdruckes und/oder eines vorbestimmten Spaltmaßes der Spalte zwischen des Reckkegels 3 und den Andruckwalzen 4 erlauben.

Fig. 4A und 4B zeigen das Umfangsblech 5 aus der Vorrichtung nach Fig. 3 in einer ersten Konfiguration größeren Durchmessers bzw. einer zweiten Konfiguration kleineren Durchmessers des Reckkegels. Es ist zu erkennen, dass das Umfangsblech in einem weiten Bereich an unterschiedliche Reckkegel-Konfigurationen (auch Kegelstumpf-Konfigurationen als Reckkegel) angepasst werden kann und somit der Einsatz unterschiedlicher Umfangsbleche bei der Ausführung der Erfindung weitgehend unnötig wird. Zu erkennen ist auch eine Abkantung an der im Gebrauchszustand inneren Kante 5a des Umfangsbleches 5, mit dem dieses hinter einer der Lamellen 3c des Reckkegels 3 eingehakt und somit auf dem Reckkegel lösbar fixiert werden kann.

Fig. 5A und 5B zeigen jeweils eine vorteilhafte Ausgestaltung der Außen-Blechkante 5b des Umfangsbleches 5, nämlich mit einer Abschrägung (Fig. 5A) bzw. einer Abrundung (Fig. 5B).

Die Ausführung der Erfindung ist insgesamt nicht auf die oben hervorgehobenen Aspekte und oben beschriebenen Beispiele beschränkt, sondern ebenso in einer Vielzahl von Abwandlungen möglich, die im Rahmen der anhängenden Ansprüche liegen.

### Bezugszeichen

- 1; 1': Anlage zum Konditionieren und Konfigurieren einer Zwischenschichtfolie (PVB-Folie)
- 2: Heiztrommel
- 3: Reckkegel
- 3a: Grundkörper des Reckkegels
- 3b: Speichen des Reckkegels
- 3c: Lamellen des Reckkegels
- 4: Andruckwalze
- 5: Umfangsblech
- 5a: Innen-Blechkante
- 5b: Außen-Blechkante
- F: Zwischenschichtfolie (PVB-Folie)

## Patentansprüche

1. Verfahren zur Herstellung einer thermoplastischen Zwischenschichtfolie (F) einer Verbundglasscheibe, welches die Schritte des Erwärmens der Zwischenschichtfolie (F) durch Umlaufen einer Heiztrommel (2) und des anschließenden Reckens der Zwischenschichtfolie (F) über einem Reckkegel (3) einschließt, um die erwärmte Zwischenschichtfolie (F) mit vorbestimmtem Andruck über den Reckkegel (3) zu führen und hierdurch für den Einbau in eine Verbundglasscheibe zu konditionieren und zu konfigurieren,
wobei der Reckkegel (3) mit einer im Wesentlichen kontinuierlich geschlossenen Umfangsfläche eingesetzt wird und ein Reckkegel (3) eingesetzt wird, dessen die Zwischenschichtfolie (F) kontaktierende Oberfläche im Wesentlichen vollständig mit einem Umfangsblech (5) bedeckt ist.

2. Verfahren nach Anspruch 1,
wobei die Zwischenschichtfolie (F) mit mindestens einer Andruckwalze (4) an den Umfang des Reckkegels (3) angedrückt wird.

3. Verfahren nach Anspruch 1 oder 2, wobei ein Reckkegel (3) eingesetzt wird, dessen Umfangsbereich höchstens eine Außen-Blechkante (5b) aufweist, die einen Abdruck in der benachbarten Oberfläche der Zwischenschichtfolie (F) hinterlassen kann, wobei die Außen-Blechkante (5b) insbesondere abgeschrägt oder abgerundet ausgeführt ist.

4. Verfahren nach einem der vorangehenden Ansprüche, wobei als Umfangsblech (5) des Reckkegels (3) ein solches eingesetzt wird, das aus Edelstahl besteht und/oder dessen Dicke im Bereich zwischen 0,5 mm und 2 mm liegt.

5. Verfahren nach einem der Ansprüche 2 bis 4, wobei die Zwischenschichtfolie (F) mit zwei oder mehr Andruckwalzen (4) an den Umfang des Reckkegels (3) angedrückt wird.

6. Vorrichtung (1; 1') zur Durchführung des Verfahrens nach einem der vorangehenden Ansprüche, welche aufweist:
eine Transporteinrichtung zum Transportieren der Zwischenschichtfolie (F) durch die Vorrichtung (1; 1'),
eine Heiztrommel (2) mit zugeordneten Führungswalzen, um die Zwischenschichtfolie (F) über einen Teilbereich des Umfangs der Heiztrommel (2) zu führen und dort auf eine vorbestimmte Temperatur zu erwärmen und
einem in Förderrichtung der Zwischenschichtfolie (F) der Heiztrommel (2) nachgeordneten Reckkegel (3) mit zugeordneten Führungswalzen, um die erwärmte Zwischenschichtfolie (F) mit vorbestimmtem Andruck über den Reckkegel (3) zu führen und hierdurch für den Einbau in eine Verbundglasscheibe zu konditionieren und zu konfigurieren,
wobei die Umfangsfläche des Reckkegels (3) im Wesentlichen kontinuierlich geschlossen ist und die Umfangsfläche des Reckkegels (3) durch ein flexibles Umfangsblech (5) derart gebildet ist, dass auf der Umfangsfläche eine Außen-Blechkante (5b) jenes Bleches vorhanden ist, während die andere Kante (5a) des Umfangsbleches (5) unter demselben und mithin nicht auf der Umfangsfläche liegt, wobei die Außen-Blechkante (5b) insbesondere abgeschrägt oder abgerundet ausgeführt ist.

7. Vorrichtung (1; 1') nach Anspruch 6,
wobei dem Reckkegel (3) mindestens eine Andruckwalze (4) zum Andrücken der Zwischenschichtfolie (F) an den Umfang des Reckkegels (3) zugeordnet ist, deren Oberfläche mit der Oberfläche des Reckkegels (3) einen geometrisch präzise bestimmten Spalt bildet, in welchem die freie Oberfläche der Zwischenschichtfolie (F) einer präzisen Formung unterworfen werden kann.

8. Vorrichtung nach Anspruch 6 oder 7, wobei das Umfangsblech (5) ein Edelstahl-Blech ist und/oder eine Dicke im Bereich zwischen 0,5 mm und 2 mm aufweist.

9. Vorrichtung nach einem der Ansprüche 6 bis 8, wobei das Umfangsblech (5) Mittel zum lösbaren Fixieren auf dem Reckkegel (3) aufweist oder ihm Mittel zum lösbaren Fixieren auf dem Reckkegel (3) zugeordnet sind.

10. Vorrichtung nach Anspruch 9, wobei die am Umfangsblech (5) vorgesehenen Mittel zum lösbaren Fixieren eine Abkantung (5b) des Umfangsbleches (5) oder die dem Umfangsblech (5) zugeordneten Mittel zum lösbaren Fixieren Schrauben zum Verschrauben des Umfangsbleches (5) mit dem Umfang des Reckkegels (3) aufweisen.

11. Vorrichtung nach einem der Ansprüche 6 bis 10, wobei das Umfangsblech (5) derart dimensioniert und spiralartig dem Reckkegel (3) angeordnet ist, dass mindestens an einem Ende des Reckkegels (3) dessen Durchmesser veränderbar ist.

12. Vorrichtung nach einem der Ansprüche 6 bis 10, wobei das Umfangsblech (5) derart dimensioniert und über dem Reckkegel angeordnet ist, dass es den Reckkegel (3) in einer einzelnen vorbestimmten Kegelstumpf-Konfiguration in seinem die Zwischenschichtfolie (F) kontaktierenden Umfangsbereich vollständig umgibt.

## Claims

1. A method for manufacturing a thermoplastic interlayer film (F) of a laminated glass pane, including the steps of heating the interlayer film (F) by circulating it over a heating drum (2) and then stretching the interlayer film (F) over a stretching cone (3) to guide the heated interlayer film (F) over the stretching cone (3) at a predetermined pressure and thereby condition and configure it for installation in a laminated glass pane,
wherein the stretching cone (3) is used with a substantially continuously closed circumferential surface, and a stretching cone (3) is used whose surface contacting the interlayer film (F) is substantially completely covered with a circumferential sheet (5).

2. Method according to claim 1,
wherein the interlayer film (F) is pressed against the periphery of the stretching cone (3) by at least one pressure roller (4).

3. Method according to claim 1 or 2, wherein a stretching cone (3) is used, the peripheral region of which has at most one outer sheet edge (5b) which can leave an impression in the adjacent surface of the interlayer film (F), the outer sheet edge (5b) being designed in particular beveled or rounded.

4. Method according to one of the preceding claims, wherein the peripheral sheet (5) of the stretching cone (3) is one which is made of stainless steel and/or whose thickness is in the range between 0.5 mm and 2 mm.

5. Method according to any one of claims 2 to 4, wherein the interlayer sheet (F) is pressed against the circumference of the stretching cone (3) by two or more pressure rollers (4).

6. Device (1; 1') for carrying out the method according to one of the preceding claims, which has:
a transport device for transporting the interlayer film (F) through the device (1; 1'),
a heating drum (2) with associated guide rollers for guiding the interlayer film (F) over a portion of the periphery of the heating drum (2) and heating it there to a predetermined temperature, and
a stretching cone (3) arranged downstream of the heating drum (2) in the conveying direction of the interlayer film (F) and having associated guide rollers, in order to guide the heated interlayer film (F) with predetermined contact pressure over the stretching cone (3) and thereby to condition and configure it for installation in a laminated glass pane,
wherein the peripheral surface of the stretching cone (3) is substantially continuously closed and the peripheral surface of the stretching cone (3) is formed by a flexible peripheral sheet (5) in such a way that an outer sheet edge (5b) of said sheet is present on the peripheral surface, while the other edge (5a) of the peripheral sheet (5) lies below the same and thus not on the peripheral surface, wherein the outer sheet edge (5b) is in particular beveled or rounded.

7. Device (1; 1') according to claim 6,
wherein the stretching cone (3) is associated with at least one pressure roller (4) for pressing the interlayer film (F) against the periphery of the stretching cone (3), the surface of which pressure roller (4) forms with the surface of the stretching cone (3) a geometrically precisely determined gap in which the free surface of the interlayer film (F) can be subjected to precise shaping.

8. Device according to claim 6 or 7, wherein the peripheral sheet (5) is a stainless steel sheet and/or has a thickness in the range between 0.5 mm and 2 mm.

9. Device according to any one of claims 6 to 8, wherein the circumferential sheet (5) has means for releasable fixing on the stretching cone (3) or is associated with means for releasable fixing on the stretching cone (3).

10. Device according to claim 9, wherein the means for releasable fixing provided on the peripheral plate (5) comprise a bend (5b) of the peripheral plate (5) or the means for releasable fixing associated with the peripheral plate (5) comprise screws for screwing the peripheral plate (5) to the periphery of the stretching cone (3).

11. Device according to one of the claims 6 to 10, wherein the circumferential plate (5) is dimensioned and arranged helically to the stretching cone (3) in such a way that at least at one end of the stretching cone (3) its diameter is variable.

12. Device according to any one of claims 6 to 10, wherein the circumferential sheet (5) is dimensioned and arranged above the stretching cone in such a way that it completely surrounds the stretching cone (3) in a single predetermined truncated cone configuration in its circumferential region contacting the interlayer film (F).

## Revendications

1. Procédé de fabrication d'un film intercalaire thermoplastique (F) d'un vitrage feuilleté, comprenant les étapes de chauffage du film intercalaire (F) en le faisant circuler sur un tambour de chauffage (2), puis d'étirement du film intercalaire (F) sur un cône d'étirement (3) pour guider le film intercalaire chauffé (F) sur le cône d'étirement (3) à une pression prédéterminée et ainsi le conditionner et le configurer pour l'installation dans un vitrage feuilleté,
dans lequel le cône d'étirement (3) est utilisé avec une surface circonférentielle fermée de manière pratiquement continue, et un cône d'étirement (3) est utilisé dont la surface en contact avec le film intercalaire (F) est pratiquement entièrement recouverte d'une feuille circonférentielle (5).

2. Procédé selon la revendication 1,
dans lequel le film intercalaire (F) est pressé contre la périphérie du cône d'étirement (3) par au moins un rouleau de pression (4).

3. Procédé selon la revendication 1 ou 2, dans lequel on utilise un cône d'étirement (3) dont la zone périphérique présente au plus un bord de feuille extérieur (5b) qui peut laisser une empreinte sur la surface adjacente du film intercalaire (F), le bord de feuille extérieur (5b) étant conçu en particulier en biseau ou arrondi.

4. Procédé selon l'une des revendications précédentes, dans lequel la feuille périphérique (5) du cône d'étirement (3) est une feuille en acier inoxydable et/ou dont l'épaisseur est comprise entre 0,5 mm et 2 mm.

5. Procédé selon l'une quelconque des revendications 2 à 4, dans lequel la feuille intercalaire (F) est pressée contre la circonférence du cône d'étirement (3) par deux ou plusieurs rouleaux de pression (4).

6. Dispositif (1; 1') pour la mise en oeuvre du procédé selon l'une des revendications précédentes, qui comporte :
un dispositif de transport pour transporter le film intercalaire (F) à travers le dispositif (1 ; 1 '), un tambour chauffant (2) avec des rouleaux de guidage associés pour guider le film intercalaire (F) sur une partie de la périphérie du tambour chauffant (2) et le chauffer à une température prédéterminée, et
un cône d'étirement (3) disposé en aval du tambour de chauffage (2) dans la direction de transport du film intercalaire (F) et comportant des rouleaux de guidage associés, afin de guider le film intercalaire chauffé (F) avec une pression de contact prédéterminée sur le cône d'étirement (3) et ainsi de le conditionner et de le configurer pour l'installation dans une vitre en verre feuilleté,
dans lequel la surface périphérique du cône d'étirement (3) est fermée de manière pratiquement continue et la surface périphérique du cône d'étirement (3) est formée par une feuille périphérique flexible (5) de telle sorte qu'un bord extérieur (5b) de ladite feuille est présent sur la surface périphérique, tandis que l'autre bord (5a) de la feuille périphérique (5) se trouve en dessous et donc pas sur la surface périphérique, le bord extérieur de la feuille (5b) étant en particulier biseauté ou arrondi.

7. Dispositif (1; 1') selon la revendication 6,
dans lequel le cône d'étirement (3) est associé à au moins un rouleau de pression (4) pour presser le film intercalaire (F) contre la périphérie du cône d'étirement (3), la surface de ce rouleau de pression (4) formant avec la surface du cône d'étirement (3) un espace géométriquement déterminé avec précision dans lequel la surface libre du film intercalaire (F) peut être soumise à une mise en forme précise.

8. Dispositif selon la revendication 6 ou 7, dans lequel la feuille périphérique (5) est une feuille d'acier inoxydable et/ou a une épaisseur comprise entre 0,5 mm et 2 mm.

9. Dispositif selon l'une quelconque des revendications 6 à 8, dans lequel la feuille périphérique (5) comporte des moyens de fixation amovible sur le cône d'étirement (3) ou est associée à des moyens de fixation amovible sur le cône d'étirement (3).

10. Dispositif selon la revendication 9, dans lequel les moyens de fixation amovible prévus sur la plaque périphérique (5) comprennent un coude (5b) de la plaque périphérique (5) ou les moyens de fixation amovible associés à la plaque périphérique (5) comprennent des vis pour visser la plaque périphérique (5) à la périphérie du cône d'étirement (3).

11. Dispositif selon l'une des revendications 6 à 10, dans lequel la plaque périphérique (5) est dimensionnée et disposée en hélice par rapport au cône d'étirement (3) de telle sorte qu'au moins à une extrémité du cône d'étirement (3) son diamètre est variable.

12. Dispositif selon l'une quelconque des revendications 6 à 10, dans lequel la plaque circonférentielle (5) est dimensionnée et disposée au-dessus du cône d'étirement de telle sorte qu'elle entoure complètement le cône d'étirement (3) dans une seule configuration tronconique prédéterminée dans sa région circonférentielle en contact avec le film intercalaire (F).
